# EUROPEAN PATENT SPECIFICATION

(11) **EP 4 307 169 B1**
(45) Date of publication and mention of the grant of the patent: **26.03.2025**
(21) Application number: 22184752.8
(22) Date of filing: 13.07.2022
(51) Int. Cl.: G06K 19/073, G06K 19/077, G06K 19/07

(54) **RFID DEVICE AND SYSTEM**
RFID-VORRICHTUNG UND -SYSTEM
DISPOSITIF ET SYSTÈME RFID

(43) Date of publication of application: 17.01.2024
(73) Proprietor: Assa Abloy AB, 107 23 Stockholm (SE)
(72) Inventor: KAPP, Hugo, 74500 Saint-Gingolph (FR); CVETKOVIC, Nenad, 1009 Pully (CH); GENOUD, Nicole, 1616 Attalens (CH); ENNABLI, Elies, 1018 Lausanne (CH)
(74) Representative: Kramer Barske Schmidtchen Patentanwälte PartG mbB

(56) References cited:
- EP-A1- 1 544 787
- US-A1- 2008 035 740
- US-A1- 2009 065 587
- US-A1- 2018 341 847

## Description

### Technical Field

The present disclosure generally relates to radio frequency identification (RFID) devices, in particular, to an RFID device that can prevent unauthorized access to data stored on the RFID device.

### Background

Generally, RFID devices such as, for example, RFID cards, RFID tags, etc. include an RFID antenna and an integrated circuit connected to the RFID antenna. Upon presence of an electromagnetic field emitted by a reader device, the RFID antenna supplies energy from the electromagnetic field to the integrated circuit, which integrated circuit may communicate with the reader device using radio frequency (RF) communication protocols. In this manner, for example, data can be read from a memory associated with the integrated circuit, and can also be written into said memory, if desired.

US 8,474,710 B2 discloses an access control proximity card with an actuation sensor. An access electronics system of the proximity card is configured to activate the same in response to an input from the actuation sensor to enable communication of access information from the proximity card.

EP 3 696 731 B1 discloses a secure RFID device, where a user can determine whether RFID communications between the RFID device and an external reader are possible/allowed.

EP 1 544 787 A1 discloses a contactless card including an antenna switch.

US 2008/0035740 A1 discloses a proximity payment card with user-actuated switch and methods of making the card.

US 2018/0341847 A1 discloses a smartcard with a coupling frame antenna.

US 2009/0065587 A1 discloses an identification token and a method of making an identification token.

The present disclosure is directed, at least in part, to improving or overcoming one or more aspects of prior systems.

### Summary of the Disclosure

According to one aspect of the present disclosure, an RFID device includes the features of claim 1.

According to another aspect of the present disclosure, an RFID system comprises an RFID reader and one or more RFID devices in accordance with the above aspect. The RFID system may further comprise a centralized data processing device in communication with the RFID reader. The RFID reader may be configured to transmit a code transmitted from the RFID device upon successive and/or simultaneous actuation of one or more actuation portions to the centralized data processing device.

Other features and aspects of the present disclosure will become apparent from the following description and the accompanying drawings.

### Brief Description of the Drawings

Fig. 1 is a plan view of an RFID device in accordance with the present disclosure.
Fig. 2 is a plan view of a pre-laminate of an RFID device which is not in accordance with the claims.
Fig. 3 is a partial cross-sectional view of the RFID device of Fig. 1 showing a switch module which is not in accordance with the claims.
Fig. 4 is a schematic plan view of a switch module which is not in accordance with the claims.
Fig. 5 is a plan view of a pre-laminate of another RFID device which is in accordance with the claims.
Fig. 6 is a schematic plan view of another switch module which is in accordance with the claims.
Fig. 7 is a schematic diagram illustrating an exemplary RFID system in accordance with the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that, with previous techniques for providing an actuation sensor such as a mechanical switch on an RFID card, such RFID cards have to be formed by cold lamination (bonding) in order to connect the actuation sensor to the RFID antenna. However, this increases the cost associated with manufacturing the RFID card, and also may not meet the requirements with respect to the qualities of ISO cards. It has been realized that, with a configuration as disclosed herein, it is possible to integrate anti-skimming protection into RFID devices using other manufacturing methods, in particular, high-temperature lamination of RFID cards.

In some implementations, it is advantageous to first laminate the RFID device including the RFID antenna, and to then process the RFID device in order to allow connection of the protection module. Generally, the provision of the protection module includes processing of the surface of the laminated RFID device, for example, by milling, to allow the integration of the protection module. In addition, such processing may also be necessary to connect an integrated circuit of the RFID device to the RFID antenna. According to the present disclosure, it has been realized that the manufacturing process can be simplified and made more efficient by including the integrated circuit in the protection module. In this manner, only one process for connecting the protection module to the RFID device, in particular, the RFID antenna of the same, is required.

The present disclosure is also based at least in part on the realization that an inductive coupling of the protection module to the RFID antenna may be advantageous. In this case, the manufacturing process can be further simplified, because it may not be necessary to process the surface of the RFID device, for example, by milling, to couple the protection module including the integrated circuit to the RFID antenna. In this case, it has been realized that it is advantageous to include a coupling antenna in the protection module that is connected to the integrated circuit of the same upon actuation by a user. The integrated circuit can then perform RFID communications via the RFID antenna that is inductively coupled to the coupling antenna inside the protection module. In this respect, it has also been realized that the inductive coupling to the RFID antenna of the RFID device allows for the provision of a plurality of protection modules, each including its own integrated circuit and coupling antenna. In this manner, a single RFID device can be used for a plurality of different applications, such as different banking applications, credit card applications, access control applications, and the like. A user can selectively actuate one of the protection modules in order to perform the desired function. The configuration also allows for the use of UHF technology, as an alternative or in addition to HF technology, for the RFID communications.

In addition, it has been realized that, in case a plurality of protection modules are provided for a single RFID device, each protection module may have an integrated circuit that is associated with, for example, a unique ID. Such a unique ID can be a password, a code, a message, or simply an alphanumeric character such as a number or a letter. In this manner, a user can transmit one or more codes, numbers, commands and the like by successively and/or simultaneously actuating one or more of the protection modules. Such commands or codes can be transmitted, for example, to RFID readers that are used for access control. For example, after recognition of an access card by a reader as a valid access card, a user may be required to additionally enter a code or password by actuating a plurality of the protection modules in a given sequence. Of course, it will be apparent that such an RFID device can be used in a number of different RFID systems that include such RFID readers, for any appropriate application. It is particularly advantageous when an RFID reader is configured to transmit the command or code received from the RFID device to a central processing device or server, thereby allowing communications between the RFID device and such a central processing device, for example, to transmit passwords, alerts, commands or the like.

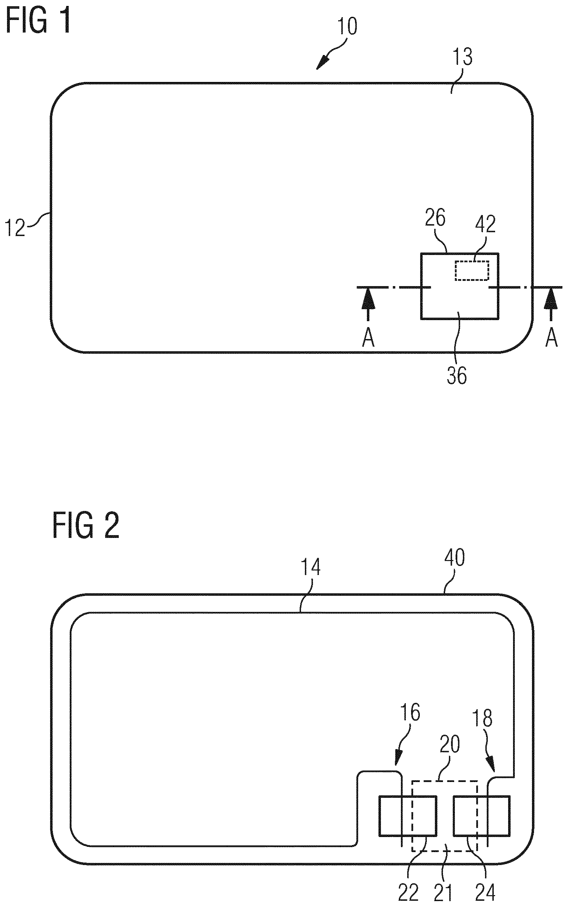

Referring now to the drawings, Fig. 1 shows a plan view of an RFID device 10 in accordance with the present disclosure. In the example shown in Fig. 1, RFID device 10 is configured as an RFID card, which may be used as an access card, a debit card, a credit card, or the like. It will be appreciated, however, that RFID device 10 may also be configured with a different shape, for example, as an RFID tag, a token etc. Further, RFID device 10 may be used for any appropriate purpose, for example, to gain access to a building or the like, as a means for payment, as a means for identification of a user/holder of the RFID device, etc. The range of possible applications for such RFID devices are well-known and will therefore not be described in detail herein.

As shown in Fig. 1, RFID device 10 comprises a device body 12 formed in the shape of a substantially rectangular card or sheet. Device body 12 has a first surface 13. In the exemplary embodiment, first surface 13 is the top surface of RFID device 10.

A switch module 26 is mounted to device body 12. As shown in Fig. 1, switch module 26 includes an actuation portion 36 provided on first surface 13, and an integrated circuit 42 that will be described in more detail below. Actuation portion 36 is configured to be actuated by a user, in a manner that will be described in more detail in the following.

Fig. 2 shows a plan view of a pre-laminate 40 of RFID card 10. In other words, Fig. 2 shows a configuration of RFID card 10 with the top layers and switch module 26 removed. As shown in Fig. 2, RFID device 10 further comprises an RFID antenna 14 embedded in device body 12 and having a coupling portion. In the example shown in Fig. 2, the coupling portion is configured as a first terminal end 16 and a second terminal end 18 of RFID antenna 14, which in this case is an open-circuit RFID antenna. RFID antenna 14 is configured to perform RFID communications with an external RFID reader in a known manner, such that further details will not be described herein. However, it will be appreciated that, although only a single turn of RFID antenna 14 is illustrated in Fig. 2, generally, RFID antenna 14 will include a plurality of turns.

In one exemplary embodiment, which is not in accordance with the claims, switch module 26 is mounted in a recess 20 formed in first surface 13. Recess 20 is shown by a dashed line in Fig. 2. A first electrical contact 22 and a second electrical contact 24 are provided at least in part on a bottom 21 of recess 20. First electrical contact 22 and second electrical contact 24 are respectively connected to terminal ends 16, 18 of RFID antenna 14.

As shown in Figs. 1 and 2, switch module 26 is mounted to device body 12 at a position corresponding to the coupling portion formed by terminal ends 16, 18 of RFID antenna 14. In particular, switch module 26 is provided at a position that corresponds to first electrical contact 22 and second electrical contact 24, by being positioned inside recess 20 in an appropriate manner. Here, it will be appreciated that, during manufacturing of RFID device 10, recess 20 will generally be formed after lamination of RFID device 10. In other words, after the lamination has been completed, recess 20 will be formed in device body 12, for example, by milling or the like of first surface 13 to expose first and second electrical contacts 22, 24. Switch module 26 can then be mounted inside recess 20 in any appropriate manner, for example, by using appropriate adhesives or the like.

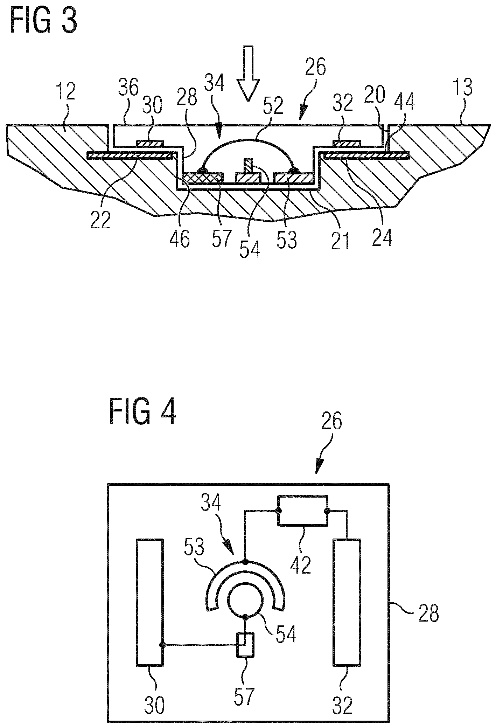

Fig. 3 shows a partial cross-section of switch module 26 along the line A-A in Fig. 1, illustrating an exemplary internal configuration of switch module 26 in more detail. Fig. 4 is a schematic plan view of the internal configuration of switch module 26. In the exemplary embodiment shown in Fig. 3, which is not in accordance with the claims, bottom 21 of recess 20 has a stepped configuration with an annular peripheral portion 44 surrounding a central recessed portion 46. It will be appreciated, however, that the stepped configuration of recess 20 is only an example, and recess 20 can have any desired configuration in the cross-section of Fig. 3. For example, recess 20 could have a constant diameter along the direction perpendicular to first surface 13.

In the example shown in Fig. 3, switch module 26 includes a switch housing 28, a first switch contact 30 exposed from switch housing 28, and a second switch contact 32 exposed from switch housing 28. First and second switch contacts 30, 32 are configured as appropriate electrical contacts. Switch housing 28 has a shape that matches the stepped configuration of bottom 21 of recess 20. In particular, switch housing 28 includes an annular peripheral connecting portion 48 on which first switch contact 30 and second switch contact 32 are provided, and a central protrusion 50 accommodating a switching portion 34.

As shown in Fig. 4, switch module 26 further includes integrated circuit 42, which is configured to perform RFID communications. Such integrated circuits, which generally include a processor and a memory and serve as a controller for performing RFID communications via RFID antenna 14, are well-known, such that a detailed description of integrated circuit 42 as well as of the manner in which communications are performed by integrated circuit 42 via RFID antenna 14 will be omitted.

Switching portion 34 is configured to couple integrated circuit 42 to RFID antenna 14 via terminal ends 16, 18 upon actuation of actuation portion 36 by a user. This will be described in more detail below with respect to the example shown in Figs. 3 and 4.

In the example shown in Figs. 3 and 4, switching portion 34 is configured to electrically couple integrated circuit 42 to RFID antenna 14 by electrically connecting integrated circuit 42 to first switch contact 30 and second switch contact 32 upon actuation of actuation portion 36. As first switch contact 30 and second switch contact 32 are electrically connected to RFID antenna 14, for example, by first and second electrical contacts 22, 24, this results in the electrical connection of integrated circuit 42 to RFID antenna 14. As used herein, the expression "upon actuation of actuation portion 36" generally means that the connection is established or present when and for as long as (while) actuation portion 36 is actuated (for example, pressed) by the user. In the example shown in Fig. 3, actuation portion 36 is configured as a flexible top portion of switch housing 28 that is substantially in the same plane as first surface 13. Of course, it will be appreciated that any other appropriate configuration, such as a tactile switch, a capacitive or other touch sensor or the like may be used for actuation portion 36.

Switching portion 34 includes a first electrically conducting switch terminal 54 electrically connected to integrated circuit 42 (in the present example, via contacts 30, 22, RFID antenna 14, and contacts 24, 32), and an electrically conducting flexible member 52 configured to be brought into contact with first electrically conducting switch terminal 54 upon actuation of actuation portion 36. In particular, as shown in Fig. 3, actuation portion 36, which generally may be formed as a cover for electrically conducting flexible member 52, is in contact with electrically conducting flexible member 52 and/or configured to deflect towards electrically conducting flexible member 52 upon actuation of actuation portion 36. In other words, when a user presses actuation portion 36 in the direction that is indicated by the arrow in Fig. 3, electrically conducting flexible member 52, which may be formed, for example, as a thin metal sheet or dome, is deflected downwards and comes into contact with first electrically conducting switch terminal 54.

Switching portion 34 includes a second electrically conducting switch terminal 53 electrically connected to integrated circuit 42 and electrically conducting flexible member 52. Accordingly, it will be appreciated that actuation of actuation portion 36 results in that an electrical circuit including integrated circuit 42 and RFID antenna 14 is closed when electrically conducting flexible member 52 comes into contact with first electrically conducting switch terminal 54 upon actuation of actuation portion 36. Therefore, in a state in which electrically conducting flexible member 52 is in contact with first electrically conducting switch terminal 54, integrated circuit 42 can perform RFID communications with an external RFID reader via RFID antenna 14. On the other hand, when actuation portion 30 is not actuated, i.e., electrically conducting flexible member 52 is not in contact with first electrically conducting switch terminal 54, the electrical circuit including RFID antenna 14 and integrated circuit 42 is interrupted, such that no RFID communications are possible.

It will be appreciated that any appropriate configuration of switching portion 34 that allows for selectively closing the electrical circuit including RFID antenna 14 and integrated circuit 42 can be used. In the example shown in Figs. 3 and 4, as previously mentioned, electrically conducting flexible member 52 is formed as a metal sheet or dome, which can be fixedly connected to second electrically conducting switch terminal 53, which may be formed to have a partially annular shape, for example, surrounding first electrically conducting switch terminal 54. In case electrically conducting flexible member 52 is formed as a dome-like metal sheet, electrically conducting flexible member 52 can be supported by an insulating portion 57 provided, for example, between first electrically conducting switch terminal 54 and electrically conducting flexible member 52. In this manner, electrically conducting flexible member 52 is electrically insulated from first electrically conducting switch terminal 54 when actuation portion 36 is not actuated, and only brought into contact with the same upon actuation of actuation portion 36.

While terminal ends 16, 18 of RFID antenna 14 are shown as linear end portions of the same in Fig. 2, which are connected to first and second electrical contacts 22, 24, respectively, it will be appreciated that the coupling portion formed by terminal ends 16, 18 can have any appropriate configuration, for example, be configured as a meandering structure formed by terminal end portions 16, 18, without providing first and second electrical contacts 22, 24. Said meandering terminal ends 16, 18 can then be directly connected to first and second switch contacts 30, 32 of switch module 26.

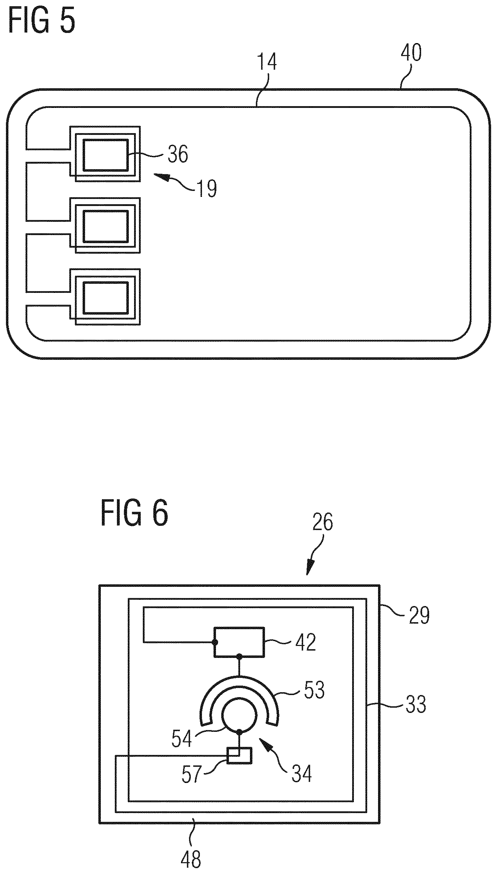

In the above, an example (not in accordance with the claims) for a switching portion that electrically couples integrated circuit 42 of switch module 26 to RFID antenna 14 upon actuation of actuation portion 36 has been described. However, in other embodiments in accordance with the claims, switching portion 34 is configured to inductively couple integrated circuit 42 to RFID antenna 14 via a corresponding coupling portion upon actuation of actuation portion 36. This will be described in the following with respect to Figs. 5 and 6.

Fig. 5 shows a plan view of a pre-laminate 40 of RFID device 10 in accordance with an embodiment in accordance with the claims. Fig. 6 shows a schematic plan view of an internal configuration of switch module 26 of this embodiment.

As shown in Fig. 5, in the present embodiment, the coupling portion is formed by one or more coupling sections 19 of RFID antenna 14. The one or more coupling sections 19 of RFID antenna 14 surround at least in part a coupling antenna 33 included in each switch module 26 (see Fig. 6). Coupling sections 19 may be formed as a section of RFID antenna 14, for example, including several turns surrounding coupling antenna 13 in a known manner. It will be appreciated that the part of RFID antenna 14 other than coupling sections 19, which serves as a booster antenna, may have any appropriate configuration that allows for performing RFID communications with an external reader, and is not limited to the exemplary configuration shown in Fig. 5.

As shown in Fig. 6, integrated circuit 42 of switch module 26 may be electrically connected between one end of coupling antenna 33 and second electrically conducting switch terminal 53. The configuration of switching portion 34 may be essentially the same as that described above with respect to Fig. 4, such that the description will be not repeated. What is important is that first electrically conducting switch terminal 54 is electrically connected to the other end of coupling antenna 33, such that upon actuation of actuation portion 36 the electrical circuit including integrated circuit 42 and coupling antenna 33 is closed. In this state, integrated circuit 42 is inductively coupled to RFID antenna 14 via the coupling portion formed by the corresponding coupling section 19 surrounding coupling antenna 33.

Here, it will be appreciated that switch housing 28 may be omitted. This also applies to the embodiment described above with respect to Figs. 1-4. Instead, for example, switch module 26 may include a substrate 29, on which at least integrated circuit 42 and switching portion 34 are provided. For example, substrate 29 may be formed as an insulating sheet laminated with a plurality of layers forming device body 12. In this manner, the one or more switch modules 26 can be included in device body 12 during manufacturing of RFID device 10. In this case, no subsequent processing of first surface 13 to embed switch module 26 is necessary. In other embodiments, however, it may also be possible to mount switch module 26, which may include switch housing 28, on top of first surface 13 after manufacturing of RFID device 10, in which only RFID terminal 14 and its coupling sections 19 are embedded. In such a case, one or more switch modules 26 only need to be positioned appropriately such that the coupling antennas of the same are surrounded at least in part by coupling sections 19.

What is common to the embodiments described above is that integrated circuit 42 is provided as part of switch module 26, and is not formed separately from the same inside or on top of RFID device 10. Instead, at least integrated circuit 42 and switching portion 34 are provided on a common support integrated with device body 12, for example, switch housing 28 or substrate 29. It will also be appreciated that, also in the embodiment in which switching portion 34 is configured to electrically couple integrated circuit 42 to RFID antenna 14 via the coupling portion upon actuation of actuation portion 36, a plurality of switch modules 26 can be provided. For example, a plurality of pairs of first and second electrical contacts 22, 24 could be connected to terminal ends 16, 18 of RFID antenna 14 in Fig. 2, or terminal ends 16, 18 could be configured as extended, for example, meandering end portions of RFID antenna 14 to which a plurality of switch modules 26 as shown in Figs. 3 and 4 can be connected. Also in this case, only the switch module that is actuated will be electrically connected to RFID antenna 14 and be capable of performing RFID communications with an RFID reader.

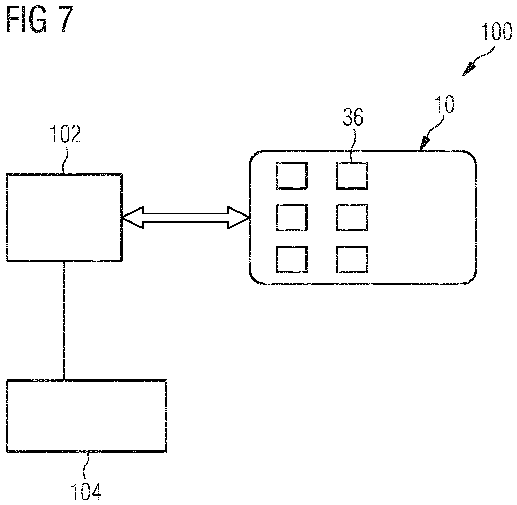

In all of the above-described embodiments, a plurality of switch modules 26 may be mounted to device body 12 and may be configured to be selectively and/or simultaneously coupled to RFID antenna 14 upon actuation of their respective actuation portions. Here, each switch module 26 may be associated with one of a plurality of different applications, for example, one or more banking applications, one or more credit card applications, and/or one or more access control applications. For example, a first switch module may be associated with a specific banking application that facilitates contactless payment via an associated bank account upon actuation of the corresponding actuation portion 36 in a known manner. This is different from commonly used bank cards, where an RFID reader can always read the necessary information to process the payment when the RFID device 10 is in proximity to the reader. In accordance with the present disclosure, however, this is only possible when the user actuates actuation portion 36 to allow RFID communications between RFID device 10 and the RFID reader. In addition, the user can even select, for example, whether he wants to pay via his bank account or via a credit card by selectively actuating a corresponding actuation portion provided on RFID device 10. Other applications can include gaining access to a facility by presenting RFID device 10 to an RFID reader provided at an entrance to such a facility. In particular in such a case, RFID device 10 may be configured such that each of a plurality of switch modules 26 includes a unique identifier, and integrated circuit 42 of each switch module 26 is configured to transmit the associated unique identifier, for example, an alphanumeric identifier, upon interrogation by an RFID reader and actuation of the corresponding actuation portion 36. An exemplary RFID system 100 including such an RFID reader 102 is shown in Fig. 7.

As shown in Fig. 7, RFID system 100 comprises RFID reader 102 and one or more RFID devices 10 including a plurality of switch modules 26 (and their corresponding actuation portions 36). Generally, a number of switch modules 26 provided on a given RFID device 10 may be between 2 and 15, for example, 10 or 12. In particular, in some embodiments, the plurality of switch modules 26 may be arranged to form a conventional keypad including the numbers between 0 and 9, and, for example, two or more special characters such as * or #. In such a case, a user can intuitively enter a code consisting of, for example, a plurality of numbers, and can indicate that the code is completed by pressing, for example, #.

It will be appreciated, however, that the application of RFID device 10 including a plurality of switch modules 26 is not limited to access control applications. For example, RFID system 100 may further comprise a centralized data processing device 104 such as a central server in communication with RFID reader 102. RFID reader 102 may be configured to transmit a code transmitted from RFID device 10 upon successive and/or simultaneous actuation of one or more, for example, two or more actuation portions 36 to centralized data processing device 104. In such a manner, a user can send a particular code or password or message to centralized data processing device 104 via an appropriate RFID reader 102. Here, it will be appreciated that any known communication protocol can be used to control the communications by reader 102, for example, to indicate a destination such as a URL or the like corresponding to centralized data processing device 104. Of course, the information that is transmitted by each switch module 26 is not limited to an alphanumeric character, but it can include more complex messages or commands that are commonly used in RFID communications.

### Industrial applicability

As described above, with the RFID device according to the present disclosure, a secure RFID device can be provided, where a user can determine when RFID communications between the RFID device and an external reader are possible/allowed. In particular, due to the fact that the switch module that is actuated by the user includes also the integrated circuit that performs the RFID communications, manufacturing of the RFID device is facilitated, because it is not necessary to perform an additional processing step in order to connect the integrated circuit to the RFID device, for example, an RFID card. Instead, the common support for at least the integrated circuit and the switching portion can be assembled with the device body of the RFID device in a single processing step. More importantly, different functionalities can be combined in a single RFID device, where the user can selectively activate a desired functionality associated with a particular application. In this manner, a user can use a single RFID device, for example, a single RFID card, to perform payments using different payment options, to gain access to a facility, and the like. In addition, in case a plurality of switch modules, each with its own integrated circuit, are provided, a user can actuate the plurality of protection modules in a given sequence in order to transmit a code such as a password, a PIN code, an access code or the like to an RFID reader, which significantly increases the flexibility and range of application of the RFID device.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of the present disclosure have been described herein, improvements and modifications may be incorporated without departing from the scope of the following claims.

## Claims

1. An RFID device (10) comprising:
- a device body (12) having a first surface (13);
- an RFID antenna (14) embedded in the device body (12) and having a coupling portion (16, 18; 19); and
- a switch module (26) mounted to the device body (12) at a position corresponding to the coupling portion (16, 18; 19), the switch module including:
an actuation portion (36) provided on the first surface (13);
an integrated circuit (42) configured to perform RFID communications; and
a switching portion (34) configured to couple the integrated circuit (42) to the RFID antenna (14) via the coupling portion (16, 18; 19) upon actuation of the actuation portion (36) by a user, **characterized in that** :
- the switch module further comprises a coupling antenna (33);
- the coupling portion is formed by one or more coupling sections (19) of the RFID antenna (14) surrounding at least in part the coupling antenna (33), and
- the switching portion (34) is configured to inductively couple the integrated circuit (42) to the RFID antenna (14) by electrically connecting the integrated circuit (42) to the coupling antenna (33) upon actuation of the actuation portion (36).

2. The RFID device of claim 1, wherein at least the integrated circuit (42) and the switching portion (34) are provided on a common support (28, 29) integrated with the device body (12).

3. The RFID device of any one of claims 1 to 2, wherein
the switching portion (34) includes a first electrically conducting switch terminal (54) electrically connected to the integrated circuit (42), and an electrically conducting flexible member (52) configured to be brought into contact with the first electrically conducting switch terminal (54) upon actuation of the actuation portion (36).

4. The RFID device of claim 3, wherein the actuation portion (36) is formed as a cover for the electrically conducting flexible member (52), optionally wherein the actuation portion (36) is in contact with the electrically conducting flexible member (52) and/or configured to deflect towards the electrically conducting switch terminal (54) upon actuation of the actuation portion (36).

5. The RFID device of claim 3 or 4, wherein the switching portion (34) includes a second electrically conducting switch terminal (53) electrically connected to the integrated circuit (42) and the electrically conducting flexible member (52), and optionally an insulating portion (57) provided between the first electrically conducting switch terminal (54) and the electrically conducting flexible member (52) and supporting the electrically conducting flexible member (52).

6. The RFID device of any one of claims 1 to 5, wherein the switch module (26) includes a switch housing (28) accommodating at least the integrated circuit (42) and the switching portion (34), the switch module (26) being mounted on the first surface (13) or at least in part in a recess (20) formed in the first surface (13).

7. The RFID device of any one of claims 1 to 6, wherein the switch module (26) includes a substrate (29), at least the integrated circuit (42) and the switching portion (34) being provided on the substrate (29), optionally wherein the substrate (29) is formed as an insulating sheet laminated with a plurality of layers forming the device body (12).

8. The RFID device of any one of claims 1 to 7, wherein the RFID device (10) includes a plurality of switch modules (26) mounted to the device body (12) and being configured to be selectively and/or simultaneously coupled to the RFID antenna (14) upon actuation of their respective actuation portions (36).

9. The RFID device of claim 8, wherein each switch module (26) is associated with one of a plurality of different applications, for example, one or more banking applications, one or more credit card applications, and/or one or more access control applications.

10. The RFID device of claim 8 or 9, wherein each switch module (26) includes a unique identifier, and the integrated circuit (42) of each switch module (26) is configured to transmit the associated unique identifier, for example, an alphanumeric identifier, upon interrogation by an RFID reader (102) and actuation of the corresponding actuation portion (36).

11. The RFID device of any one of claims 8 to 10, wherein a number of switch modules (26) is between 2 and 15, for example, 10 or 12.

12. An RFID system (100) comprising:
an RFID reader (102); and
one or more RFID devices (10) in accordance with any one of claims 1 to 11,
optionally further comprising a centralized data processing device (104) in communication with the RFID reader (102), wherein the RFID reader (102) is configured to transmit a code transmitted from the RFID device (10) upon successive and/or simultaneous actuation of one or more, for example, two or more actuation portions (36) to the centralized data processing device (104).

13. The RFID system of claim 12, wherein the RFID system (100) is an access control system, and the RFID device (10) is configured to transmit an access code to the RFID reader (102) upon successive and/or simultaneous actuation of the one or more actuation portions (36).

## Patentansprüche

1. RFID-Vorrichtung (10) mit:
- einem Vorrichtungskörper (12) mit einer ersten Oberfläche (13);
- einer RFID-Antenne (14), die in den Vorrichtungskörper (12) eingebettet ist und einen Kopplungsteil (16, 18; 19) aufweist; und
- einem Schaltermodul (26), das an einer Position, die dem Kopplungsteil (16, 18; 19) entspricht, an dem Vorrichtungskörper (12) montiert ist, wobei das Schaltermodul aufweist:
einen Betätigungsteil (36), der auf der ersten Oberfläche (13) vorgesehen ist;
eine integrierte Schaltung (42), die zum Durchführen von RFID-Kommunikationen ausgebildet ist; und
einen Schaltteil (34), der zum Koppeln der integrierten Schaltung (42) mit der RFID-Antenne (14) über den Kopplungsteil (16, 18; 19) bei einer Betätigung des Betätigungsteils (36) durch einen Benutzer ausgebildet ist, **dadurch gekennzeichnet, dass**:
- das Schaltermodul ferner eine Kopplungsantenne (33) aufweist;
- der Kopplungsteil durch einen oder mehrere Kopplungsabschnitte (19) der RFID-Antenne (14) gebildet wird, die die Kopplungsantenne (33) zumindest teilweise umgeben, und
- der Schaltteil (34) zum induktiven Koppeln der integrierten Schaltung (42) mit der RFID-Antenne (14) durch elektrisch Verbinden der integrierten Schaltung (42) mit der Kopplungsantenne (33) bei einer Betätigung des Betätigungsteils (36) ausgebildet ist.

2. RFID-Vorrichtung nach Anspruch 1, bei der mindestens die integrierte Schaltung (42) und der Schaltteil (34) auf einem gemeinsamen Träger (28, 29) vorgesehen sind, der mit dem Vorrichtungskörper (12) integriert ist.

3. RFID-Vorrichtung nach einem der Ansprüche 1 bis 2, bei der
der Schaltteil (34) einen ersten elektrisch leitenden Schalteranschluss (54), der elektrisch mit der integrierten Schaltung (42) verbunden ist, und ein elektrisch leitendes flexibles Bauteil (52), das dazu ausgebildet ist, bei einer Betätigung des Betätigungsteils (36) in Kontakt mit dem ersten elektrisch leitenden Schalteranschluss (54) gebracht zu werden, aufweist.

4. RFID-Vorrichtung nach Anspruch 3, bei der der Betätigungsteil (36) als eine Abdeckung für das elektrisch leitende flexible Bauteil (52) ausgebildet ist, wobei optional der Betätigungsteil (36) in Kontakt mit dem elektrisch leitenden flexiblen Bauteil (52) ist und/oder zum Biegen in Richtung des elektrisch leitenden Schalteranschlusses (54) bei einer Betätigung des Betätigungsteils (36) ausgebildet ist.

5. RFID-Vorrichtung nach Anspruch 3 oder 4, bei der der Schaltteil (34) einen zweiten elektrisch leitenden Schalteranschluss (53), der elektrisch mit der integrierten Schaltung (42) und dem elektrisch leitenden flexiblen Bauteil (52) verbunden ist, und optional einen Isolierteil (57), der zwischen dem ersten elektrisch leitenden Schalteranschluss (54) und dem elektrisch leitenden flexiblen Bauteil (52) vorgesehen ist und das elektrisch leitende flexible Bauteil (52) trägt, aufweist.

6. RFID-Vorrichtung nach einem der Ansprüche 1 bis 5, bei der das Schaltermodul (26) ein Schaltergehäuse (28) aufweist, das mindestens die integrierte Schaltung (42) und den Schaltteil (34) aufnimmt, wobei das Schaltermodul (26) auf der ersten Oberfläche (13) oder zumindest teilweise in einer Vertiefung (20), die in der ersten Oberfläche (13) ausgebildet ist, montiert ist.

7. RFID-Vorrichtung nach einem der Ansprüche 1 bis 6, bei der das Schaltermodul (26) ein Substrat (29) aufweist, wobei mindestens die integrierte Schaltung (42) und der Schaltteil (34) auf dem Substrat (29) vorgesehen sind, wobei optional das Substrat (29) als eine Isolierlage ausgebildet ist, die mit mehreren Schichten, die den Vorrichtungskörper (12) bilden, laminiert ist.

8. RFID-Vorrichtung nach einem der Ansprüche 1 bis 7, bei der die RFID-Vorrichtung (10) mehrere Schaltermodule (26) aufweist, die an dem Vorrichtungskörper (12) montiert sind und dazu ausgebildet sind, bei einer Betätigung ihrer jeweiligen Betätigungsteile (36) selektiv und/oder gleichzeitig mit der RFID-Antenne (14) gekoppelt zu werden.

9. RFIF-Vorrichtung nach Anspruch 8, bei der jedes Schaltermodul (26) einer von mehreren unterschiedlichen Anwendungen, beispielsweise einer oder mehreren Bankanwendungen, einer oder mehreren Kreditkartenanwendungen und/oder einer oder mehreren Zugangskontrollanwendungen, zugeordnet ist.

10. RFID-Vorrichtung nach Anspruch 8 oder 9, bei der jedes Schaltermodul (26) einen eindeutigen Identifizierer aufweist und die integrierte Schaltung (42) jedes Schaltermoduls (26) ausgebildet ist zum Übertragen des zugehörigen eindeutigen Identifizierers, beispielsweise ein alphanumerischer Identifizierer, bei einer Abfrage durch ein RFID-Lesegerät (102) und einer Betätigung des entsprechenden Betätigungsteils (36).

11. RFID-Vorrichtung nach einem der Ansprüche 8 bis 10, bei der eine Anzahl von Schaltmodulen (26) zwischen 2 und 15, beispielsweise 10 oder 12, ist.

12. RFID-System (100) mit:
einem RFID-Lesegerät (102); und
einer oder mehreren RFID-Vorrichtungen (10) nach einem der Ansprüche 1 bis 11,
optional ferner mit einer zentralen Datenverarbeitungsvorrichtung (104) in Kommunikation mit dem RFID-Lesegerät (102), wobei das RFID-Lesegerät (102) dazu ausgebildet ist, einen von der RFID-Vorrichtung (10) bei aufeinanderfolgender und/oder gleichzeitiger Betätigung eines oder mehrerer, beispielsweise zwei oder mehr, Betätigungsteile (36) übertragenen Code zu der zentralen Datenverarbeitungsvorrichtung (104) zu übertragen.

13. RFID-System nach Anspruch 12, bei dem das RFID-System (100) ein Zugangskontrollsystem ist und die RFID-Vorrichtung (10) zum Übertragen eines Zugangscodes zu dem RFID-Lesegerät (102) bei aufeinanderfolgender und/oder gleichzeitiger Betätigung der ein oder mehreren Betätigungsteile (36) ausgebildet ist.

## Revendications

1. Dispositif RFID (10) comprenant :
- un corps de dispositif (12) ayant une première surface (13) ;
- une antenne RFID (14) incorporée dans le corps de dispositif (12) et ayant une partie de couplage (16, 18 ; 19) ; et
- un module de commutation (26) monté sur le corps de dispositif (12) à une position correspondant à la partie de couplage (16, 18 ; 19), le module de commutation comprenant :
- une partie d'actionnement (36) pourvue sur la première surface (13) ;
- un circuit intégré (42) configuré pour effectuer des communications RFID ; et
- une partie de commutation (34) configurée pour coupler le circuit intégré (42) à l'antenne RFID (14) via la partie de couplage (16, 18 ; 19) lors de l'actionnement de la partie d'actionnement (36) par un utilisateur, **caractérisé en ce que** :
- le module de commutation comprend en outre une antenne de couplage (33) ;
- la partie de couplage est formée par une ou plusieurs sections de couplage (19) de l'antenne RFID (14) entourant au moins en partie l'antenne de couplage (33) ; et
- la partie de commutation (34) est configurée pour coupler par induction le circuit intégré (42) à l'antenne RFID (14) en connectant électriquement le circuit intégré (42) à l'antenne de couplage (33) lors de l'actionnement de la partie d'actionnement (36).

2. Dispositif RFID de la revendication 1, dans lequel au moins le circuit intégré (42) et la partie de commutation (34) sont pourvus sur un support commun (28, 29) intégré au corps de dispositif (12).

3. Dispositif RFID de l'une quelconque des revendications 1 à 2, dans lequel
la partie de commutation (34) comprend une première borne de commutation à conduction électrique (54) connectée électriquement au circuit intégré (42), et un élément flexible à conduction électrique (52) configuré pour être mis en contact avec la première borne de commutation à conduction électrique (54) lors de l'actionnement de la partie d'actionnement (36).

4. Dispositif RFID de la revendication 3, dans lequel la partie d'actionnement (36) est formée comme un couvercle pour l'élément flexible à conduction électrique (52), éventuellement dans lequel la partie d'actionnement (36) est en contact avec l'élément flexible à conduction électrique (52) et/ou configurée pour dévier vers la borne de commutation à conduction électrique (54) lors de l'actionnement de la partie d'actionnement (36).

5. Dispositif RFID de la revendication 3 ou 4, dans lequel la partie de commutation (34) comprend une deuxième borne de commutation à conduction électrique (53) connectée électriquement au circuit intégré (42) et à l'élément flexible à conduction électrique (52), et éventuellement une partie isolante (57) pourvue entre la première borne de commutation à conduction électrique (54) et l'élément flexible à conduction électrique (52) et supportant l'élément flexible à conduction électrique (52).

6. Dispositif RFID de l'une quelconque des revendications 1 à 5, dans lequel le module de commutation (26) comprend un boîtier de commutation (28) accueillant au moins le circuit intégré (42) et la partie de commutation (34), le module de commutation (26) étant monté sur la première surface (13) ou au moins en partie dans un évidement (20) formé dans la première surface (13).

7. Dispositif RFID de l'une quelconque des revendications 1 à 6, dans lequel le module de commutation (26) comprend un substrat (29), au moins le circuit intégré (42) et la partie de commutation (34) étant pourvus sur le substrat (29), éventuellement dans lequel le substrat (29) est formé comme une feuille isolante laminée avec une pluralité de couches formant le corps de dispositif (12).

8. Dispositif RFID de l'une quelconque des revendications 1 à 7, dans lequel le dispositif RFID (10) comprend une pluralité de modules de commutation (26) montés sur le corps de dispositif (12) et configurés pour être sélectivement et/ou simultanément couplés à l'antenne RFID (14) lors de l'actionnement de leurs parties d'actionnement respectives (36).

9. Dispositif RFID de la revendication 8, dans lequel chaque module de commutation (26) est associé à une application parmi la pluralité de différentes applications, par exemple une ou plusieurs applications bancaires, une ou plusieurs applications de cartes de crédit et/ou une ou plusieurs applications de contrôle d'accès.

10. Dispositif RFID de la revendication 8 ou 9, dans lequel chaque module de commutation (26) comprend un identifiant unique, et le circuit intégré (42) de chaque module de commutation (26) est configuré pour transmettre l'identifiant unique associé, par exemple un identifiant alphanumérique, lors de l'interrogation par un lecteur RFID (102) et de l'actionnement de la partie d'actionnement correspondante (36).

11. Dispositif RFID de l'une quelconque des revendications 8 à 10, dans lequel le nombre de modules de commutation (26) est compris entre 2 et 15, par exemple 10 ou 12.

12. Système RFID (100) comprenant :
un lecteur RFID (102) ; et
un ou plusieurs dispositifs RFID (10) conformément à l'une quelconque des revendications 1 à 11,
éventuellement, comprenant en outre un dispositif centralisé de traitement de données (104) en communication avec le lecteur RFID (102), dans lequel le lecteur RFID (102) est configuré pour transmettre au dispositif centralisé de traitement des données (104) un code transmis par le dispositif RFID (10) lors de l'actionnement successif et/ou simultané d'une ou plusieurs, par exemple, deux ou plusieurs parties d'actionnement (36).

13. Système RFID de la revendication 12, dans lequel le système RFID (100) est un système de contrôle d'accès, et le dispositif RFID (10) est configuré pour transmettre un code d'accès au lecteur RFID (102) lors de l'actionnement successif et/ou simultané de la ou les parties d'actionnement (36).
